# EUROPEAN PATENT APPLICATION

(11) **EP 4 729 910 A1**
(43) Date of publication of application: **22.04.2026**
(21) Application number: 25201321.4
(22) Date of filing: 10.09.2025
(51) Int. Cl.: G01L 9/00, B81C 1/00

(54) **MULTIPLE SENSOR RANGE SINGLE-SILICON DIE STRUCTURE**

(30) Priority: 15.10.2024 US 202418915724
(71) Applicant: HONEYWELL INTERNATIONAL INC., Charlotte, NC 28202 (US)
(72) Inventor: WADE, Richard A., Charlotte, 28202 (US)
(74) Representative: Haseltine Lake Kempner LLP

(57) **Abstract**

A pressure sensor component comprising a base wafer comprising a first piezoresistive Wheatstone bridge that is configured to measure a first pressure range associated with a first pressure that is applied onto a surface of the base wafer; and a top wafer that is coupled to the surface, the top wafer comprising (i) a diaphragm that includes a pin element, (ii) a second piezoresistive Wheatstone bridge that is configured to measure a second pressure range that is associated with a force that opposes the first pressure at a base of the pin element, and (iii) a third piezoresistive Wheatstone bridge that is configured to measure a third pressure range that is associated with beam stress at a perimeter of the diaphragm.

## Description

### TECHNICAL FIELD

Various embodiments of the present disclosure relate to pressure sensing elements, and more particularly to piezoresistive pressure sensor dies that are capable of providing improved resolutions at a plurality of pressure ranges.

### BACKGROUND

Certain applications may require pressure sensors that are capable of providing high-resolution measurements. In particular, it may be desirable to have a single pressure sensor that is capable of providing high-resolution measurements at low pressure levels as well as capable of providing measurements at much higher pressure levels that are accurate and precise. Applicant has identified many technical challenges and difficulties associated with conventional pressure sensors.

### BRIEF SUMMARY

Various embodiments described herein relate to components, apparatuses, and systems for measuring pressure.

In accordance with various embodiments of the present disclosure, a pressure sensor component is provided. In some embodiments, the pressure sensor component comprises a base wafer comprising a first piezoresistive Wheatstone bridge that is configured to measure a first pressure range associated with a first pressure that is applied onto a surface of the base wafer; and a top wafer that is coupled to the surface, the top wafer comprising (i) a diaphragm that includes a pin element, (ii) a second piezoresistive Wheatstone bridge that is configured to measure a second pressure range that is associated with a force that opposes the first pressure at a base of the pin element, and (iii) a third piezoresistive Wheatstone bridge that is configured to measure a third pressure range that is associated with beam stress at a perimeter of the diaphragm.

In some embodiments, the pin element extends perpendicularly from a plane of the diaphragm at an underside of the top wafer. In some embodiments, the diaphragm is configured to deflect towards an underside of the top wafer in response to receiving a second pressure that is applied on the diaphragm from a topside of the top wafer. In some embodiments, the pin element is configured to apply the first pressure onto the surface. In some embodiments, the pin element is configured to apply the first pressure onto the surface based on a portion of a second pressure that is received by the diaphragm.

In some embodiments, the pressure sensor component further comprises a plurality of conductive leads and pads that are configured to conduct a plurality of voltage signals that respectively correspond to the first piezoresistive Wheatstone bridge, the second piezoresistive Wheatstone bridge, or the third piezoresistive Wheatstone bridge. In some embodiments, the plurality of conductive leads and pads are combined to generate output signals that comprise a sum or one or more alternate combinations of outputs associated with the first piezoresistive Wheatstone bridge, the second piezoresistive Wheatstone bridge, or the third piezoresistive Wheatstone bridge. In some embodiments, the first piezoresistive Wheatstone bridge is further configured to (i) measure surface stress from contact by the pin element and (ii) generate output voltage based on the surface stress. In some embodiments, the second piezoresistive Wheatstone bridge is further configured to (i) measure reactive stress on the diaphragm at or near the base of the pin element and (ii) generate output voltage based on the reactive stress. In some embodiments, the third piezoresistive Wheatstone bridge is further configured to (i) measure beam deflection stress along a perimeter of the diaphragm and (ii) generate output voltage based on the beam deflection stress. In some embodiments, the second pressure range is greater than the first pressure range and the third pressure range is greater than the first pressure range and the second pressure range. In some embodiments, the top wafer comprises a cavity formed around a region on a underside of the top wafer that is adjacent to the diaphragm and comprises the pin element. In some embodiments, the cavity is one of sealed or vented.

In some embodiments, the pressure sensor component comprises a base wafer comprising a first piezoresistive Wheatstone bridge that is configured to measure a first pressure within a first pressure range; and a top wafer that is coupled to at least a portion of a top surface of the base wafer, the top wafer comprising (i) a second piezoresistive Wheatstone bridge that is configured to measure a second pressure within a second pressure range and (ii) a third piezoresistive Wheatstone bridge that is configured to measure a third pressure within a third pressure range.

In some embodiments, the base wafer comprises a shape and/or one or more dimensions that are larger than the top wafer. In some embodiments, the base wafer comprises an exposed portion of the top surface that provides access to a conductive pad associated with the first piezoresistive Wheatstone bridge. In some embodiments, the top wafer comprises a diaphragm that includes a pin element on an underside of the top wafer. In some embodiments, (i) the first piezoresistive Wheatstone bridge is configured to (a) measure surface stress on the base wafer from contact by the pin element and (b) generate a first output voltage based on the surface stress, (ii) the second piezoresistive Wheatstone bridge is configured to (a) measure reactive stress on the diaphragm at or near a base of the pin element and (b) generate a second output voltage based on the reactive stress, and (iii) the third piezoresistive Wheatstone bridge is configured to (a) measure beam deflection stress along a perimeter of the diaphragm, and (b) generate a third output voltage based on the beam deflection stress. In some embodiments, (i) the top wafer comprises a cavity formed around a region on a underside of the top wafer that is adjacent to the diaphragm and comprises the pin element and (ii) the cavity is one of sealed or vented.

In accordance with various embodiments of the present disclosure, a pressure sensor wafer is provided. In some embodiments, the pressure sensor wafer comprises a diaphragm including a pin element; a first piezoresistive Wheatstone bridge that is configured to measure a first pressure range that is associated with a force at a base of the pin element; and a second piezoresistive Wheatstone bridge that is configured to measure a second pressure range that is associated with beam stress at a perimeter of the diaphragm.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is an exploded view of an example pressure sensor component in accordance with some embodiments of the present disclosure;
FIG. 2 is a cross-sectional view of an example pressure sensor component in accordance with some embodiments of the present disclosure; and
FIG. 3 is a cross-sectional view of an example pressure sensor component in accordance with some embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc., are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with pressure sensors. Various example embodiments of the present disclosure overcome such technical challenges and difficulties in pressure sensors and provide various technical advancements and improvements. In accordance with various embodiments of the present disclosure, example components of pressure sensors are disclosed.

According to some embodiments, a pressure sensor component may comprise wafer structures that are based on Wheatstone bridge configurations that are configured to detect (i) beam deflection stresses and strains via a diaphragm and/or a pin element and (ii) surface stress from mechanical contact by the pin element, which may provide a significant increase in output sensitivity. In some embodiments, a pressure sensor component may comprise a top wafer and a base wafer. The base wafer may comprise a first piezoresistive Wheatstone bridge that is configured to generate output voltage representative of a measurement of pressure that is within a first pressure range associated with a pressure that is at least partially transferred from a top wafer via a pin element onto the top surface of the base wafer. The top wafer may comprise a second piezoresistive Wheatstone bridge that is configured to generate output voltage representative of a measurement of pressure that is within a second pressure range associated with deflection of a diaphragm on the top wafer caused by an opposing force at the base of the pin element on the diaphragm when pressure transferred by the pin element onto the top surface of the base wafer exceeds the first pressure range (or enters a non-linear region). The top wafer may further comprise a third piezoresistive Wheatstone bridge that is configured to generate output voltage representative of a measurement of pressure that is within a third pressure range associated with deflection of the diaphragm caused by beam stress at the perimeter of the diaphragm.

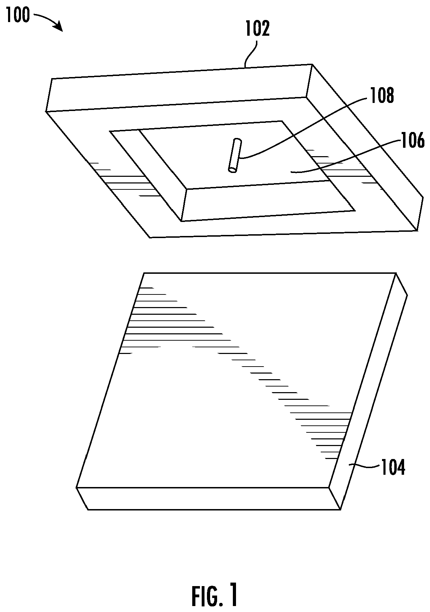

FIG. 1 is an exploded view of an example pressure sensor component 100 in accordance with some embodiments of the present disclosure. The pressure sensor component 100 comprises a two wafer composite die that includes a top wafer 102 and a base wafer 104. The top wafer 102 comprises a diaphragm 106 that includes a pin element 108 on an underside of the top wafer 102 that extends perpendicularly from a plane of the diaphragm 106. The diaphragm 106 and the pin element 108 may be formed by etching a portion of the underside of the top wafer 102 such that a cavity is sculpted around a region on the underside of the top wafer 102 that is adjacent to the diaphragm 106 and comprises the pin element 108. The cavity may provide an area for allowing deflection of the diaphragm 106 (e.g., towards the underside of the top wafer 102 upon application of a downward pressure on the diaphragm 106 from the topside of the top wafer 102). In some embodiments, the pin element 108 may be located near or within a center of the diaphragm 106. In some other embodiments, the pin element 108 may be offset from a center of the diaphragm 106.

The top wafer 102 and the base wafer 104 may each comprise piezoresistive Wheatstone bridge circuits that convert pressure into electrical signals (e.g., output voltage). In some embodiments, a piezoresistive Wheatstone bridge may operate based on the piezoresistive effect and be used to measure a change in electrical resistance when a mechanical strain is applied. For example, when a load is placed on the diaphragm 106, a piezoresistive Wheatstone bridge embedded therein may be configured to generate output voltage based on a resistance change associated with the load, wherein the output voltage may be correlated or used to determine a pressure value.

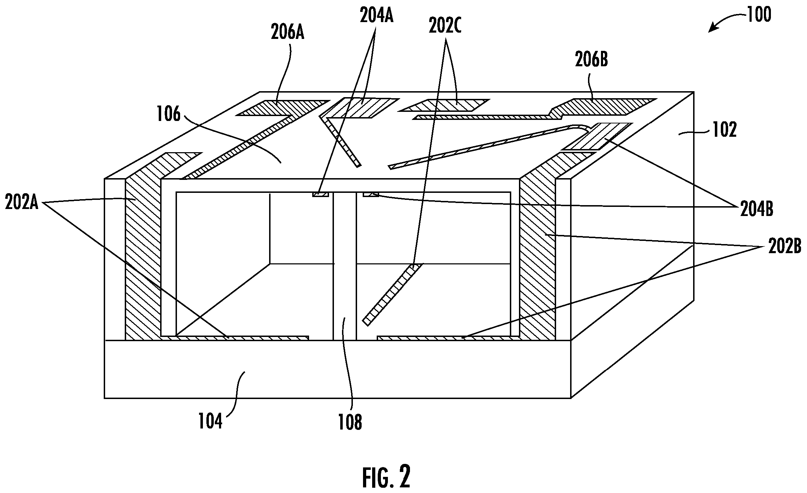

FIG. 2 is a cross-sectional view of an example pressure sensor component 100 in accordance with some embodiments of the present disclosure. The underside of top wafer 102 is bonded to the base wafer 104, for example, by using a mixture of conductive and/or non-conductive adhesives or glass pastes. In some embodiments, the underside of the top wafer 102 comprises the same or substantially similar perimeter dimensions as the top surface of the base wafer 104. As such, the underside of top wafer 102 may be aligned and coupled with the base wafer 104 without forming a significant exposure or overhang of either the top wafer 102 or the base wafer 104. In some embodiments, the underside of top wafer 102 is coupled to a top surface of the base wafer 104 such that the pin element 108 is in contact with the top surface of the base wafer 104. In some embodiments, the pin element 108 may be configured to transfer at least a portion of pressure from application of force on diaphragm 106 at the top wafer 102 to the top surface of the base wafer 104.

Bonding the underside of the top wafer 102 to the base wafer 104 may enclose the pin element 108 and the cavity formed around the region comprising the pin element 108. According to some embodiments, the cavity may be sealed to provide functionality for measuring absolute pressure. In some other embodiments, the cavity may be vented to provide functionality for measuring gauge pressure. In some example embodiments, the cavity may be vented vertically through the top wafer 102 or the base wafer 104, or horizontally through the top wafer 102 or a seam between the top wafer 102 and the base wafer 104.

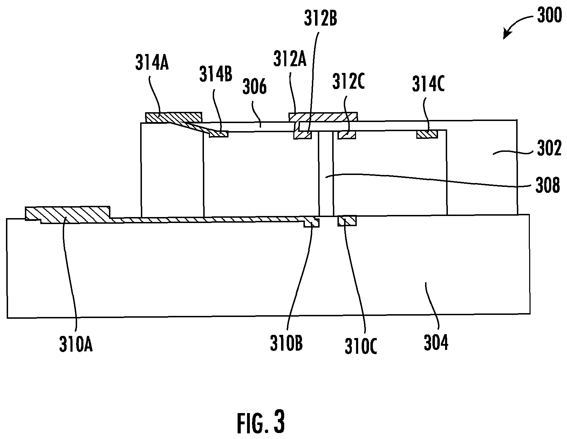

The top surface of top wafer 102 comprises conductive leads and pads that may be configured to conduct voltage signals generated by one or more piezoresistive Wheatstone bridges that are embedded on the top wafer 102 and the base wafer 104. The pressure sensor component 100 comprises (i) a first set of conductive leads and pads 202A, 202B, 202C, (ii) a second set of conductive leads and pads 204A, 204B, and (iii) a third set of conductive leads and pads 206A, 206B. In some embodiments, the first set of conductive leads and pads 202A, 202B, 202C may be associated with a first piezoresistive Wheatstone bridge that is (i) configured on the base wafer 104, (ii) configured to measure surface stress from contact by the pin element 108, and (iii) configured to generate output voltage based on the measured surface stress. As depicted in FIG. 2, the first set of conductive leads and pads 202A, 202B, 202C may extend from a portion of the top surface of the base wafer 104 that is adjacent to a point of contact with the pin element 108 to the top surface of the top wafer 102. In some embodiments, the first set of conductive leads and pads 202A, 202B, 202C, may comprise through-silicon vias (TSV) for bringing voltage signals to the top surface of top wafer 102 from the base wafer 104 by passing through the top wafer 102. Alternatively, TSVs may be obviated in a design that is described in further detail with respect to the description of FIG. 3. In some embodiments, the second set of conductive leads and pads 204A, 204B may be associated with a second piezoresistive Wheatstone bridge that is (i) configured on the top wafer 102, (ii) configured to measure reactive stress on the diaphragm 106 at or near the base of pin element 108, and (iii) configured to generate output voltage based on the measured reactive stress. In some embodiments, the third set of conductive leads and pads 206A, 206B may be associated with a third piezoresistive Wheatstone bridge that is (i) configured on the top wafer 102, (ii) configured to measure beam deflection stress (e.g., downward towards a direction of the base wafer 104 or an inner cavity formed between an underside of the top wafer 102 and the base wafer 104) along the perimeter of the diaphragm 106, and (iii) configured to generate output voltage based on the measured beam deflection stress.

In some embodiments, the metallization paths of the first set of conductive leads and pads 202A, 202B, 202C, the second set of conductive leads and pads 204A, 204B, and the third set of conductive leads and pads 206A, 206B are not limited to the depictions of FIG. 2 and may be optimized to reduce undesirable interactions between metals and semiconductors. In some embodiments, any of the first set of conductive leads and pads 202A, 202B, 202C, the second set of conductive leads and pads 204A, 204B, or the third set of conductive leads and pads 206A, 206B may be combined to generate output signals that comprise a sum or some alternate combination of outputs generated by the first piezoresistive Wheatstone bridge, the second piezoresistive Wheatstone bridge, or the third piezoresistive Wheatstone bridge.

According to various embodiments of the present disclosure, the pressure sensor component 100 may be configured to sense pressure that is received on the diaphragm 106 at the topside of the top wafer 102. In some embodiments, pressure from an application of force on the diaphragm 106 may be at least partially transferred from the diaphragm 106 to the base wafer 104 via the pin element 108 and cause the first piezoresistive Wheatstone bridge to measure a resulting pressure within a first pressure range and generate corresponding output voltage. In some embodiments, as the pressure received on the diaphragm 106 increases, the voltage signal from the first piezoresistive Wheatstone bridge may increase until the voltage enters a non-linear region between pressure and resistance, thereby exceeding the first pressure range. In some embodiments, upon the pressure received on the diaphragm 106 exceeding the first pressure range, the second piezoresistive Wheatstone bridge may be configured to measure the increased pressure (and generate corresponding output voltage) within a second pressure range that is greater than the first pressure range, which may cause deflection on the diaphragm 106 by an opposing force at the base of the pin element 108 on the diaphragm 106. In some embodiments, even greater pressure (e.g., exceeding the first pressure range and the second pressure range) received on the diaphragm 106 may cause the third piezoresistive Wheatstone bridge to measure the even greater pressure (and generate corresponding output voltage) within a third pressure range that is greater than the first pressure range and the second pressure range, which may cause deflection on the diaphragm 106 by beam deflection stress along the perimeter of the diaphragm 106.

FIG. 3 is a cross-sectional view of an example pressure sensor component 300 in accordance with some embodiments of the present disclosure. The pressure sensor component 300 comprises a top wafer 302 that is bonded to at least a portion of the base wafer 304. As depicted in FIG. 3 the base wafer 304 comprises a shape and/or dimensions that are larger than the top wafer 302 to provide exposure or access to conductive pads (e.g., conductive pad 310A) on the base wafer 304. As such, electrical connections from the base wafer 304 may be accessible through an exposed portion (or flange) of the top surface of base wafer 304 thereby obviating the usage of TSVs and/or adhesive layers (e.g., comprising conductive and/or non-conductive patterns).

The top wafer 302 comprises a diaphragm 306 that includes a pin element 308 on an underside of the top wafer 302 that extends perpendicularly from a plane of the diaphragm 306. The diaphragm 306 and the pin element 308 may be formed by etching a portion of the underside of the top wafer 302 such that a cavity is sculpted around a region on the underside of the top wafer 302 that is adjacent to the diaphragm 306 and comprises the pin element 308. The cavity may provide an area for allowing deflection of the diaphragm 306 (e.g., towards the underside of the top wafer 302 upon application of a downward pressure on the diaphragm 306 from the topside of the top wafer 302). In some embodiments, the pin element 308 may be located near or within a center of the diaphragm 306. In some embodiments, the pin element 308 may be offset from a center of the diaphragm 306.

In some embodiments, the underside of top wafer 302 is coupled to at least a portion of a top surface of the base wafer 304 such that the pin element 308 is in contact with the top surface of the base wafer 304 within at least the portion of the top surface of the base wafer 304. As such, pin element 308 may be configured to transfer at least a portion of pressure from application of force on diaphragm 306 at the top wafer 302 to the top surface of the base wafer 304. The cavity formed around the region comprising the pin element 308 is enclosed between an underside of the top wafer 302 and the top surface of top wafer 302. According to various embodiments, the cavity may be either sealed or vented. In some embodiments, the cavity may be sealed to provide functionality for measuring absolute pressure. In some other embodiments, the cavity may be vented to provide functionality for measuring gauge pressure. In some example embodiments, the cavity may be vented vertically through the top wafer 302 or the base wafer 304, or horizontally through the top wafer 302 or a seam between the top wafer 302 and the base wafer 304.

In some embodiments, the top wafer 302 and the base wafer 304 may each comprise piezoresistive Wheatstone bridge circuits that convert pressure into electrical signals. The top surface of top wafer 302 and at least an exposed portion (or flange) of the top surface of base wafer 304 (e.g., not overlapped by the top wafer 302) comprise conductive leads and pads that may be configured to conduct voltage signals generated by one or more piezoresistive Wheatstone bridges that are embedded on the top wafer 302 and the base wafer 304. The base wafer 304 comprises a conductive pad 310A and conductive leads 310B, 310C. The top wafer 302 comprises conductive pads 312A, 314A and conductive leads 312B, 312C, 314B, 314C.

In some embodiments, a first set of conductive leads and pads comprising the conductive pad 310A and the conductive leads 310B, 310C may be associated with a first piezoresistive Wheatstone bridge. In some embodiments, the first piezoresistive Wheatstone bridge may be (i) configured on the base wafer 304, (ii) configured to measure surface stress on the base wafer 304 from contact by the pin element 308, and (iii) configured to generate output voltage based on the measured surface stress. As depicted in FIG. 3, the conductive lead 310B may extend from a portion of the top surface of the base wafer 304 that is adjacent to a point of contact with the pin element 308 to the exposed portion of the top surface of base wafer 304. In some embodiments, a second set of conductive leads and pads comprising the conductive pad 312A and the conductive leads 312B, 312C may be associated with a second piezoresistive Wheatstone bridge. In some embodiments, the second piezoresistive Wheatstone bridge may be (i) configured on the top wafer 302, (ii) configured to measure reactive stress on the diaphragm 306 at or near the base of pin element 308, and (iii) configured to generate output voltage based on the measured reactive stress. In some embodiments, a third set of conductive leads and pads comprising the conductive pad 314A and the conductive leads 314B, 314C may be associated with a third piezoresistive Wheatstone bridge. In some embodiments, the third piezoresistive Wheatstone bridge may be (i) configured on the top wafer 302, (ii) configured to measure beam deflection stress (e.g., downward towards an inner cavity in a direction of the base wafer 304) along the perimeter of the diaphragm 306, and (iii) configured to generate output voltage based on the measured beam deflection stress. In some embodiments, any of the first set of conductive leads and pads (conductive pad 310A and the conductive leads 310B, 310C), the second set of conductive leads and pads (conductive pad 312A and the conductive leads 312B, 312C), or the third set of conductive leads and pads (conductive pad 314A and the conductive leads 314B, 314C) may be combined to generate output signals that comprise a sum or some alternate combination of outputs generated by the first piezoresistive Wheatstone bridge, the second piezoresistive Wheatstone bridge, or the third piezoresistive Wheatstone bridge.

According to various embodiments of the present disclosure, the pressure sensor component 300 may be configured to sense pressure that is received on the diaphragm 306 at the topside of the top wafer 302. In some embodiments, pressure from an application of force on the diaphragm 306 may be at least partially transferred to the base wafer 304 via the pin element down 308 and cause the first piezoresistive Wheatstone bridge to measure a resulting pressure within a first pressure range and generate corresponding output voltage. In some embodiments, as the pressure received on the diaphragm 306 increases, the voltage signal from the first piezoresistive Wheatstone bridge may increase until the voltage enters a non-linear region between pressure and resistance, thereby exceeding the first pressure range. In some embodiments, upon the pressure received on the diaphragm 306 exceeding the first pressure range, the second piezoresistive Wheatstone bridge may be configured to measure the increased pressure (and generate corresponding output voltage) within a second pressure range that is greater than the first pressure range, which may cause deflection on the diaphragm 106 by an opposing force at the base of the pin element 308 on the diaphragm 306. In some embodiments, even greater pressure (e.g., exceeding the first pressure range and the second pressure range) received on the diaphragm 306 may cause the third piezoresistive Wheatstone bridge to measure the even greater pressure (and generate corresponding output voltage) within a third pressure range that is greater than the first pressure range and the second pressure range, which may cause deflection on the diaphragm 106 by beam deflection stress along the perimeter of the diaphragm 306.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A pressure sensor component comprising:
a base wafer comprising a first piezoresistive Wheatstone bridge that is configured to measure a first pressure range associated with a first pressure that is applied onto a surface of the base wafer; and
a top wafer that is coupled to the surface, the top wafer comprising (i) a diaphragm that includes a pin element that is configured to apply the first pressure onto the surface, wherein the pin element extends perpendicularly from a plane of the diaphragm at an underside of the top wafer, (ii) a second piezoresistive Wheatstone bridge that is configured to measure a second pressure range that is associated with a force that opposes the first pressure at a base of the pin element, and (iii) a third piezoresistive Wheatstone bridge that is configured to measure a third pressure range that is associated with beam stress at a perimeter of the diaphragm.

2. The pressure sensor component of claim 1, wherein the diaphragm is configured to deflect towards an underside of the top wafer in response to receiving a second pressure that is applied on the diaphragm from a topside of the top wafer.

3. The pressure sensor component of claim 1, wherein the pin element is configured to apply the first pressure onto the surface based on a portion of a second pressure that is received by the diaphragm.

4. The pressure sensor component of claim 1 further comprising a plurality of conductive leads and pads that are configured to conduct a plurality of voltage signals that respectively correspond to the first piezoresistive Wheatstone bridge, the second piezoresistive Wheatstone bridge, or the third piezoresistive Wheatstone bridge.

5. The pressure sensor component of claim 4, wherein the plurality of conductive leads and pads are combined to generate output signals that comprise a sum or one or more alternate combinations of outputs associated with the first piezoresistive Wheatstone bridge, the second piezoresistive Wheatstone bridge, or the third piezoresistive Wheatstone bridge.

6. The pressure sensor component of claim 1, wherein the first piezoresistive Wheatstone bridge is further configured to (i) measure surface stress from contact by the pin element and (ii) generate output voltage based on the surface stress.

7. The pressure sensor component of claim 1, wherein the second piezoresistive Wheatstone bridge is further configured to (i) measure reactive stress on the diaphragm at or near the base of the pin element and (ii) generate output voltage based on the reactive stress.

8. The pressure sensor component of claim 1, wherein the third piezoresistive Wheatstone bridge is further configured to (i) measure beam deflection stress along a perimeter of the diaphragm and (ii) generate output voltage based on the beam deflection stress.

9. The pressure sensor component of claim 1, wherein (i) the second pressure range is greater than the first pressure range and (ii) the third pressure range is greater than the first pressure range and the second pressure range.

10. The pressure sensor component of claim 1, wherein the top wafer comprises a cavity formed around a region on a underside of the top wafer that is adjacent to the diaphragm and comprises the pin element.

11. A pressure sensor component comprising:
a base wafer comprising a first piezoresistive Wheatstone bridge that is configured to measure a first pressure within a first pressure range; and
a top wafer that is coupled to at least a portion of a top surface of the base wafer, the top wafer comprising (i) a second piezoresistive Wheatstone bridge that is configured to measure a second pressure within a second pressure range, (ii) a third piezoresistive Wheatstone bridge that is configured to measure a third pressure within a third pressure range, and (iii) a diaphragm that includes a pin element on an underside of the top wafer.

12. The pressure sensor component of claim **11,** wherein the base wafer comprises an exposed portion of the top surface that provides access to a conductive pad associated with the first piezoresistive Wheatstone bridge.

13. The pressure sensor component of claim **11,** wherein
(i) the first piezoresistive Wheatstone bridge is configured to (a) measure surface stress on the base wafer from contact by the pin element and (b) generate a first output voltage based on the surface stress,
(ii) the second piezoresistive Wheatstone bridge is configured to (a) measure reactive stress on the diaphragm at or near a base of the pin element and (b) generate a second output voltage based on the reactive stress, and
(iii) the third piezoresistive Wheatstone bridge is configured to (a) measure beam deflection stress along a perimeter of the diaphragm, and (b) generate a third output voltage based on the beam deflection stress.

14. The pressure sensor component of claim **11,** wherein (i) the top wafer comprises a cavity formed around a region on a underside of the top wafer that is adjacent to the diaphragm and comprises the pin element and (ii) the cavity is one of sealed or vented.

15. A pressure sensor wafer comprising:
a diaphragm including a pin element;
a first piezoresistive Wheatstone bridge that is configured to measure a first pressure range that is associated with a force at a base of the pin element; and
a second piezoresistive Wheatstone bridge that is configured to measure a second pressure range that is associated with beam stress at a perimeter of the diaphragm.
